# EUROPEAN PATENT SPECIFICATION

(11) **EP 2 522 908 B1**
(45) Date of publication and mention of the grant of the patent: **03.01.2018**
(21) Application number: 12167575.5
(22) Date of filing: 10.05.2012
(51) Int. Cl.: F23N 1/02, F23N 5/18, F23R 3/34, F02C 9/26

(54) **Control method for controlling the pilot gas supply to at least one burner assembly of a gas turbine plant and gas turbine plant**
Steuerungsverfahren zur Steuerung der Pilotgaszufuhr zu mindestens einer Brenneranordnung einer Gasturbinenanlage, und Gasturbinenanlage
Procédé de commande pour contrôler l'alimentation en gaz pilote d'au moins un ensemble brûleur d'une centrale de turbine à gaz et installation de turbine à gaz

(30) Priority: 10.05.2011 IT MI20110811
(43) Date of publication of application: 14.11.2012
(73) Proprietor: Ansaldo Energia S.p.A., Genova (IT)
(72) Inventor: Piana, Carlo, 21100 Varese (IT); Costa, Paolo, 16126 Genova (IT); Macchiavello, Giulio, 16100 Genova (IT)
(74) Representative: Bergadano, Mirko

(56) References cited:
- EP-A1- 2 261 487
- WO-A1-2009/016665
- US-A1- 2007 089 395

## Description

The present invention relates to a control method for controlling the pilot gas supply to at least one burner assembly of a gas turbine plant, and to a gas turbine plant. An example of a control method for controlling the pilot gas supply is disclosed in US 2007/0089395.

Gas turbine plants of known type comprise an annular combustion chamber provided with a plurality of burner assemblies. Each burner assembly is provided with a main premixing burner, commonly referred to as premix burner, and with a pilot burner.

In recent years, the introduction of the energy price negotiation on an hourly basis and the progressive spreading of alternative energy sources (in particular of the windpower and photovoltaic fields) have led to an increase in the variability of the power supplied by each plant.

Any plant connected to an electricity network, except for windpower and photovoltaic plants, must adjust the power input (also referred to as load) to comply with the mains frequency (50Hz in Europe, 60Hz in the USA).

Mains frequency variations are an indicator of the balance between electric energy production and consumption: if the mains frequency decreases, it means that the energy consumption exceeds production; in contrast, if the mains frequency increases, the energy production exceeds consumption.

In order to avoid undesired oscillations in the mains frequency, plants must respond to variations in power requirement (commonly referred to as primary requirement) by the mains in well-defined times. Moreover, the primary requirement adds up to the ordinary internal power variation requirements comprising plant requirements and small power variations (in the range of few MW), unavoidably due to the combustion and control process physics.

Plants of known type are not always capable of obtaining power variations within the required times. Recently, in fact, power variations in the range of as much as 36 MW/min have been required and it often happens that the plants are not capable of meeting this type of requirements.

It is an object of the present invention to provide a control method for controlling the pilot gas supply to at least one burner assembly of a gas turbine plant, and a gas turbine plant free from the prior art drawbacks mentioned above; in particular, it is an object of the invention to provide a control method for controlling the pilot gas supply to at least one burner assembly capable of allowing the plant to supply high power variations within the required times. It is a further object of the present invention to provide a gas turbine plant capable of supplying high power variations within the required times.

According to such objects, the present invention relates to a control method for controlling the pilot gas supply to at least one burner assembly of a gas turbine plant, and to a gas turbine plant according to claims 1 and 8, respectively.

Further features and advantages of the present invention will clearly appear from the following description of a non-limiting embodiment thereof, made with reference to the figures in the accompanying drawings, in which:
- figure 1 shows a diagrammatic view of a gas turbine plant comprising a control device for controlling the pilot gas supply to at least one burner assembly according to the present invention;
- figure 2 shows a detail of the control device in figure 1;
- figure 3 shows a detail of the block diagram in figure 2.

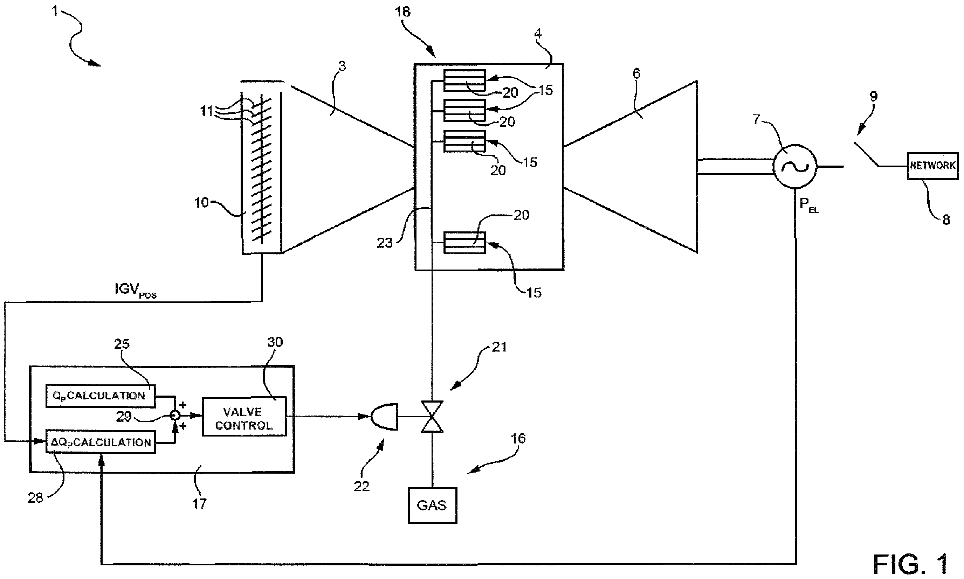

In figure 1, reference numeral 1 indicates a gas turbine plant for producing electric energy.

Plant 1 comprises a compressor 3, a combustion chamber 4, a gas turbine 6 and a generator 7, which transforms the mechanical power supplied by turbine 6 into electric power P_{EL} to be supplied to an electricity network 8 connected to generator 7 by a switch 9.

Compressor 3 is provided with an inlet stage 10 having a varying geometry. The inlet stage 10 comprises a plurality of adjustable inlet stator vanes 11 (diagrammatically shown in figure 1), commonly referred to as IGV (Inlet Guide Vane), the position IGVPOS of which may be changed to adjust an air flow rate drawn by the compressor 3 itself.

The combustion chamber 4 is preferably of the annular type and comprises a plurality of burner assemblies 15, a gas supply circuit 16 configured to supply the burner assemblies 15, and a control device 17 to control the gas supply to at least one burner assembly 15.

The burner assemblies 15 are arranged along a circular path close to an annular peripheral edge 18 of the combustion chamber 4 and face the interior of the combustion chamber 4.

In the non-limiting example described and shown herein, there are twenty-four burner assemblies 15.

Each burner assembly 15 extends along an axis and comprises a main peripheral burner (not shown for simplicity) and a central pilot burner 20 (diagrammatically shown in figure 1).

The main burner is of the premix type and is preferably arranged around the pilot burner 20.

The gas supply circuit 16 comprises a premix supply line (not shown for simplicity), configured to supply the main burners, and a pilot supply line 21, configured to supply the pilot burners 20.

In particular, the pilot supply line 21 comprises a control valve 22 and a manifold 23 connected to the pilot burners 20 of each burner assembly 15.

The opening degree of the control valve 22 is adjusted by the control device 17 for controlling the pilot gas supply to at least one burner assembly 15 according to the present invention.

In particular, the control device 17 is configured to adjust the opening of the control valve 22.

The control device 17 comprises a first calculation module 25 configured to calculate a pilot gas basis flow rate Q_{P}, a second calculation module 28 configured to calculate a pilot gas flow rate variation ΔQ_{P}, an adder node 29 configured to provide the sum of the pilot gas basis flow rate Q_{P} and the pilot gas flow rate variation ΔQ_{P}, and a valve control module 30, which is configured to control the opening of the control valve 22 on the basis of the sum of the pilot gas basis flow rate Q_{P} and the pilot gas flow rate variation ΔQ_{P}.

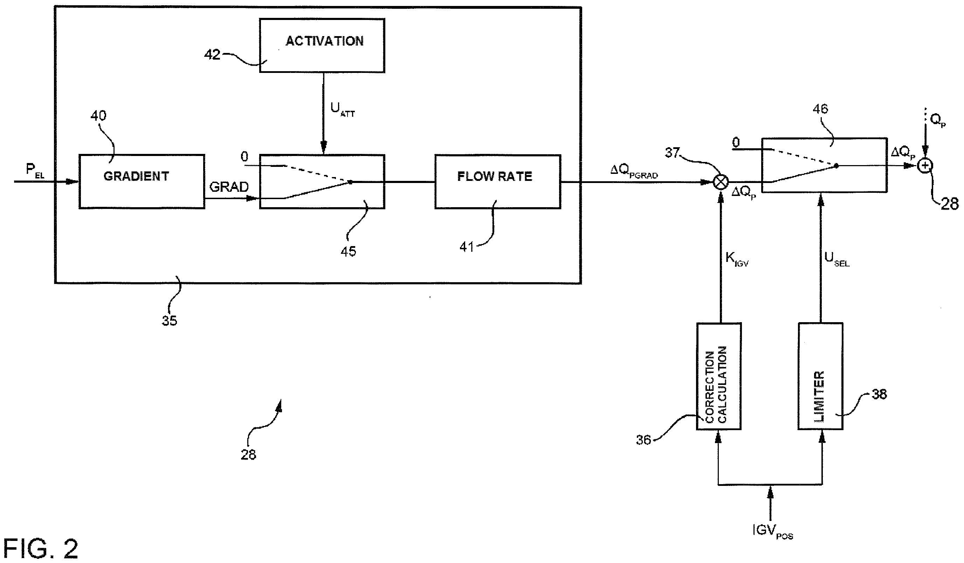

With reference to figure 2, the second calculation module 28 is configured to calculate a pilot gas flow rate variation ΔQ_{P} on the basis of the position IGV_{POS} of the adjustable inlet stator vanes 11 and to the electric power P_{EL} supplied by generator 7.

The calculation module 28 comprises a calculation block 35 configured to calculate a pilot gas flow rate variation ΔQP_{grad}, a correction calculation block 36 configured to calculate a correction coefficient K_{IGV} for correcting the pilot gas flow rate variation ΔQ_{Pgrad} on the basis of the position IGV_{POS}, a multiplier node 37 and a limiter block 38.

The calculation block 35 is configured to calculate the pilot gas flow rate variation ΔQ_{Pgrad} on the basis of the electric power P_{EL} supplied by generator 7; in particular, the calculation block 35 is configured to calculate the pilot gas flow rate variation ΔQ_{Pgrad} on the basis of the electric power gradient GRAD.

Here and hereinafter, the term electric power gradient GRAD means the variation ΔP_{EL} in the electric power supplied by generator 7 in the time unit.

In particular, the calculation block 35 comprises a gradient module 40, a flow rate module 41 and an activation module 42.

The gradient module 40 is configured to calculate the electric power gradient GRAD.

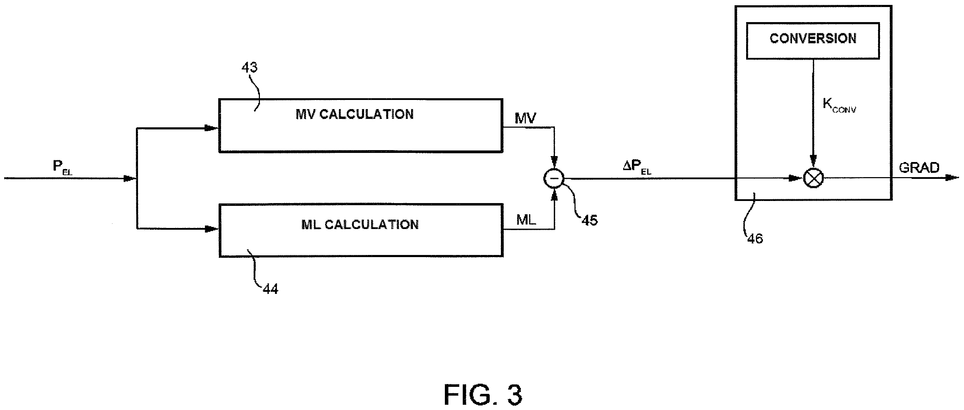

With reference to figure 3, the gradient module 40 comprises a calculation module MV 43 configured to calculate a fast average MV of the input signal P_{EL}, a calculation module ML 44 configured to calculate a slow average ML of the input signal P_{EL}, a subtractor node 45 and a conversion module 46.

In particular, the calculation module MV 43 and the calculation module ML 44 are configured to calculate a respective moving average of the input electric power signal P_{EL} considering different time intervals.

In particular, the calculation module MV 43 is configured to calculate the fast average MV as a moving average in a time interval of a magnitude order of tenths of seconds. By means of the average, the power oscillations P_{EL} considered as "noise" are substantially filtered.

The calculation module MV 43 preferably consists of a series of low pass filters, each being characterized by a time constant from 0.1s to Is, preferably of 0.4 sec.

The calculation module ML 44 is configured to calculate the slow average ML as a moving average in a time interval of a magnitude order which is higher than tens of seconds. By means of the average, the power oscillations P_{EL} considered as "noise" are substantially filtered.

The calculation module ML 44 preferably consists of a series of low pass filters, each being characterized by a time constant from 3s to 10s, preferably of 5 sec.

The subtractor node 45 obtains the difference between the slow average ML and the fast average MV for achieving the electric power variation ΔP_{EL}.

The conversion module 46 is configured so as to convert the electric power variation ΔP_{EL} calculated by the subtractor node 45 into electric power gradient GRAD. In particular, the conversion module 46 is configured to multiply the electric power variation ΔP_{EL} by a coefficient K_{CONV} having a predetermined value, so as to obtain a quantity expressed in MW/min.

With reference to figure 2, the flow rate module 41 is configured to calculate a pilot gas flow rate variation ΔQ_{Pgrad} on the basis of the electric power gradient GRAD calculated by the gradient module 40.

The pilot gas flow rate variation ΔQ_{Pgrad} thus calculated is fed to the multiplier node 37 to be corrected by the correction coefficient K_{IGV}.

The flow rate module 41 preferably calculates the pilot gas flow rate variation ΔQ_{Pgrad} by means of a table obtained experimentally and containing different values of the pilot gas flow rate variation ΔQ_{Pgrad} on the basis of the electric power gradient value GRAD.

In a variant, the flow rate module 41 calculates the pilot gas flow rate variation ΔQ_{P1} by means of a parametric function.

The activation module 42 is configured to control a selector 45 arranged between the gradient module 40 and the flow rate module 41 through an enabling signal UATT. Preferably, the enabling signal UATT is a predetermined, logical two-state signal (defined by an operator or coming from the overall control system of the plant).

On the basis of the enabling signal U_{ATT}, selector 45 may take two operating positions; a first position where selector 45 feeds the electric power gradient GRAD to the flow rate module 41, and a second position where selector 45 feeds a zero signal to the flow rate module 41 in order to obtain a null pilot gas flow rate variation ΔQ_{Pgrad}.

The correction calculation block 36 is configured to calculate a correction coefficient K_{IGV} adapted to correct the pilot gas flow rate variation ΔQ_{Pgrad} on the basis of the position IGV_{POS}.

In particular, the correction calculation block 36 calculates the correction coefficient K_{IGV} on the basis of position IGV_{POS} of the adjustable inlet stator vanes 11, and feeds it to the multiplier node 37. The correction coefficient K_{IGV} preferably has a value in the range between 0 and 1, determined by means of a table obtained experimentally and containing different values of the correction coefficient K_{IGV} on the basis of the position IGV_{POS} of the adjustable inlet stator vanes 11.

Therefore, a pilot gas flow rate variation ΔQ_{P} is outputted from multiplier 37, which variation has been calculated on the basis of the electric power gradient GRAD and corrected on the basis of the position IGV_{POS} of the adjustable inlet stator vanes 11.

The limiter block 38 is configured to control a selector 46 arranged downstream of the multiplier node 37 by means of a selection signal U_{SEL}.

Selector 46 may take two operating positions on the basis of the selection signal value U_{SEL}.

When the selection signal U_{SEL} has a first value, selector 36 takes a first position where it connects the multiplier node 37 to the adder node 29.

When the selection signal U_{SEL} has a second value, selector 36 takes a second operating position where it feeds a zero value to the adder node 29.

Preferably, the selection signal U_{SEL} is a logical two-state signal calculated by the limiter block 38 on the basis of the position IGV_{POS} of the adjustable inlet stator vanes 11.

In particular, the limiter block 38 is configured so as to supply a signal U_{SEL} equal to the first value (first operating position of selector 46), if the position IGV_{POS} is within a configurable range, preferably from about 0.1 to about 0.9, and equal to the second value (second operating position of selector 46), if the position IGV_{POS} is not within the predefined range.

In essence, if the position IGV_{POS} is close to the maximum position value (0) or to the minimum position value (1), the correction of the pilot gas basis flow rate Q_{P} as a function of gradient GRAD is inhibited.

In contrast, if the position IGV_{POS} is sufficiently far from the maximum and minimum position values, the correction of the pilot gas basis flow rate Q_{P} as a function of gradient GRAD is active. In this case, the pilot gas flow rate variation ΔQ_{P} from the multiplier node 37 is fed to the adder node 29 in order to vary the pilot gas basis flow rate Q_{P}.

The control device 17 according to the present invention is advantageously capable of adjusting the pilot gas supply to at least one burner assembly 15 in a simple and reliable manner, while ensuring high performance of plant 1.

By virtue of the control device 17, plant 1 is in fact capable of meeting primary power requirements from network 8 up to about 36 MW/min and above.

Indeed, the control device 17 provides a pilot gas flow rate sufficient for stably supplying the flame and effectively compensating the instabilities caused by quick power variations.

## Claims

1. A control method for controlling the supply of pilot gas to at least one burner assembly (15) of a gas turbine plant (1); the burner assembly (15) comprising at least one pilot burner (20); the method comprising the steps of:
- supplying a pilot gas basis flow rate (Qp) to the pilot burner (20);
- calculating a gradient (GRAD) of the electric power (P_{EL}) supplied by the gas turbine plant (1);
- calculating a pilot gas flow rate variation (ΔQ_{P}) on the basis of the calculated gradient (GRAD);
- modifying the pilot gas basis flow rate (Qp) on the basis of the calculated pilot gas flow rate (ΔQ_{P}) ;
the method being **characterized in that** the step of calculating a gradient (GRAD) of the electric power (P_{EL}) comprises the steps of:
- calculating a first moving average (MV) of the electric power (P_{EL}) in a first time interval;
- calculating a second moving average (ML) of the electrical power (P_{EL}) in a second time interval longer than the first time interval;
- calculating the gradient (GRAD) on the basis of the comparison between the first moving average (MV) and the second moving average (ML).

2. A method according to claim 1, wherein the step of modifying the pilot gas basis flow rate (Qp) on the basis of the calculated pilot gas flow rate (ΔQ_{P}) comprises the step of modifying the pilot gas basis flow rate (Qp) when the position (IGV_{POS}) of a plurality of adjustable inlet stator vanes (11) of a compressor (3) of the gas turbine plant (1) is included within a predefined interval.

3. A method according to claim 2, wherein the predefined interval is about 0.1 to 0.9.

4. A method according to claim 2 or 3, comprising the step of not modifying the pilot gas basis flow rate (Q_{P}) when the position (IGV_{POS}) is not included within the predefined interval.

5. A method according to any of the preceding claims, wherein the step of modifying the pilot gas flow rate (Qp) comprises the step of adding the calculated pilot gas flow rate variation (ΔQ_{P})to the pilot gas basis flow rate (Q_{P}).

6. A method according to anyone of claims from 2 to 5, comprising the steps of:
- calculating a correction coefficient (K_{IGV}) on the basis of the position (IGV_{POS}) of a plurality of adjustable inlet stator vanes (11) of a compressor (3) of the gas turbine plant (1);
- correcting the pilot gas flow rate variation (ΔQ_{P}) on the basis of the calculated correction coefficient (K_{IGV}) .

7. A method according to anyone of the foregoing claims, wherein the first interval is of the order of tenths of seconds, and the second time interval is of the order of tens of seconds.

8. A gas turbine power plant comprising:
at least one burner assembly (15), provided with at least one pilot burner (20) fed with a pilot gas basis flow rate (Q_{P});
a compressor (3) provided with a plurality of adjustable inlet stator vanes (11);
a control device (17) configured :
- to calculate a gradient (GRAD) of the electric power (P_{EL}) supplied by the gas turbine plant (1);
- to calculate a pilot gas flow rate variation (ΔQ_{P})on the basis of the calculated gradient (GRAD);
- to modify the pilot gas basis flow rate (Qp) on the basis of the calculated pilot gas flow rate (ΔQ_{P}) ;
the plant being **characterized in that** the control device (17) is configured to calculate the gradient (GRAD) of the electric power (P_{EL}) supplied by the gas turbine plant (1) on the basis of the comparison between a first moving average (MV) of the electric power (P_{EL}) and a second moving average (ML) of the electrical power (P_{EL}); the first moving average (MV) being calculated in a first time interval and the second moving average (ML) being calculated in a second time interval longer than the first time interval.

9. A plant according to claim 8, wherein the control device (17) is configured to modify the pilot gas basis flow rate (Qp) to supply to the pilot burner (20) on the basis of the calculated pilot gas flow rate (ΔQ_{P}) when the position (IGV_{POS}) of the plurality of adjustable inlet stator vanes (11) is included within a predefined range.

10. A plant according to claim 9, wherein the predefined range is about 0.1 to 0.9.

11. A plant according to claim 9 or 10, wherein the control device (17) is configured to not modify the pilot gas basis flow rate (Qp) when the position (IGV_{POS}) is not included within the predefined range.

12. A plant according to any of claims 8 to 11, wherein the control device (17) is configured to add the calculated pilot gas flow rate variation (ΔQ_{P})to the pilot gas basis flow rate (Q_{P}).

13. A plant according to any of claims 9 to 12, wherein the control device (17) is configured to:
- calculate a correction coefficient (K_{IGV}) on the basis of the position (IGV_{POS}) of the plurality of adjustable inlet stator vanes (11);
- correct the pilot gas flow rate variation (ΔQ_{P}) on the basis of the calculated correction coefficient (K_{IGV}).

14. A plant according to anyone of claims 8 to 13, wherein the first time interval is in the range of tenths of seconds and the second time interval is in the range of tens of seconds.

## Patentansprüche

1. Verfahren zur Steuerung der Pilotgaszufuhr in mindestens eine Brenneranordnung (15) einer Gasturbinenanlage (1), wobei die Brenneranordnung (15) mindestens einen Pilotbrenner (20) und das Verfahren folgende Schritte umfasst:
- Zufuhr einer Pilotgas-Basisdurchflussmenge (Qp) in den Pilotbrenner (20);
- Berechnung eines Gradienten (GRAD) der von der Gasturbinenanlage (1) zugeführten elektrischen Energie (P_{EL}) ;
- Berechnung einer Pilotgas-Durchflussmengenänderung (ΔQ_{P}) auf der Basis des berechneten Gradienten (GRAD);
- Ändern der Pilotgas-Basisdurchflussmenge (Qp) auf der Basis der berechneten Pilotgas-Durchflussmenge (ΔQ_{P}) ;
wobei das Verfahren **dadurch gekennzeichnet ist, dass** der Schritt der Berechnung des Gradienten (GRAD) der elektrischen Energie (P_{EL}) folgende Schritte umfasst:
- Berechnung eines ersten gleitenden Mittelwertes (MV) der elektrischen Energie (P_{EL}) in einem ersten Zeitintervall;
- Berechnung eines zweiten gleitenden Mittelwertes (MV) der elektrischen Energie (P_{EL}) in einem zweiten Zeitintervall, das länger ist als das erste Zeitintervall
- Berechnung des Gradienten (GRAD) auf der Basis des Vergleichs zwischen dem ersten gleitenden Mittelwert (MV) und dem zweiten gleitenden Mittelwert (MV).

2. Verfahren nach Anspruch 1, wobei der Schritt der Änderung der Pilotgas-Basisdurchflussmenge (Qp) auf der Basis der berechneten Pilotgas-Durchflussmenge (ΔQ_{P})einen Schritt umfasst, in dem die Pilotgas-Basisdurchflussmenge (Qp), wenn die Position (IGV_{POS}) einer Vielzahl regulierbarer Einlassleitschaufeln (11) eines Verdichters (3) der Gasturbinenanlage (1) in ein vorgegebenes Intervall einbezogen wird, geändert wird.

3. Verfahren nach Anspruch 2, wobei das vorgegebene Intervall etwa 0,1 bis 0,9 beträgt.

4. Verfahren nach Anspruch 2 oder 3, das den Schritt umfasst, in dem die Pilotgas-Basisdurchflussmenge (Qp), wenn die Position (IGV_{POS}) nicht in das vorgegebene Intervall einbezogen wird, nicht geändert wird.

5. Verfahren nach einem der vorstehenden Ansprüche, wobei der Schritt der Änderung der Pilotgas-Basisdurchflussmenge (Qp) den Schritt umfasst, in dem die berechnete Pilotgas-Durchflussmengenänderung (ΔQ_{P})zu der Pilotgas-Basisdurchflussmenge (Qp) hinzugerechnet wird.

6. Verfahren nach einem der Ansprüche 2 bis 5, das folgende Schritte umfasst:
- Berechnung eines Korrekturkoeffizienten (K_{IGV}) auf der Basis der Position (IGV_{POS}) einer Vielzahl regulierbarer Einlassleitschaufeln (11) eines Verdichters (3) der Gasturbinenanlage (1);
- Berichtigung der Pilotgas-Durchflussmengenänderung (ΔQ_{P})auf der Basis des berechneten Korrekturkoeffizienten (K_{IGV}) .

7. Verfahren nach einem der vorstehenden Ansprüche, wobei das erste Intervall im Bereich von Zehntelsekunden liegt und das zweite Intervall im Bereich einiger zehn Sekunden liegt.

8. Gasturbinenanlage, umfassend:
mindestens eine Brenneranordnung (15) mit mindestens einem Pilotbrenner (20), dem eine Pilotgas-Basisdurchflussmenge (Qp) zugeführt wird;
einen Verdichter (3) mit einer Vielzahl regulierbarer Einlassleitschaufeln (11);
eine Steuervorrichtung (17), die konfiguriert ist:
- einen Gradienten (GRAD) der von der Gasturbinenanlage (1) zugeführten elektrischen Energie (P_{EL}) zu berechnen;
- eine Pilotgas-Durchflussmengenänderung (ΔQ_{P})auf der Basis des berechneten Gradienten (GRAD) zu berechnen;
- die Pilotgas-Basisdurchflussmenge (Qp) auf der Basis der berechneten Pilotgas-Durchflussmenge (ΔQ_{P})zu ändern;
wobei die Anlage **dadurch gekennzeichnet ist, dass** die Steuervorrichtung (17) konfiguriert ist, den Gradienten (GRAD) der von der Gasturbinenanlage (1) zugeführten elektrischen Energie (P_{EL}) auf der Basis des Vergleichs zwischen einem ersten gleitenden Mittelwert (MV) der elektrischen Energie (P_{EL}) und einem zweiten gleitenden Mittelwert (MV) elektrischen Energie (P_{EL}) zu berechnen;
wobei der erste gleitende Mittelwert (MV) in einem ersten Zeitintervall und der zweite gleitende Mittelwert (MV) in einem zweiten Zeitintervall berechnet wird, das länger ist als das erste Zeitintervall.

9. Anlage nach Anspruch 8, wobei die Steuervorrichtung (17) konfiguriert ist, die Pilotgas-Durchflussmenge (Qp) zu ändern, die dem Pilotbrenner (20) auf der Basis der berechneten Pilotgas-Durchflussmenge (ΔQ_{P})zuzuführen ist, wenn die Position (IGV_{POS}) der Vielzahl regulierbarer Einlassleitschaufeln (11) in einen vorgegebenen Bereich einbezogen wird.

10. Anlage nach Anspruch 9, wobei der vorgegebene Bereich 0,1 bis 0,9 beträgt.

11. Anlage nach Anspruch 9 oder 10, wobei die Steuervorrichtung (17) konfiguriert ist, die Pilotgas-Durchflussmenge (Qp) nicht zu ändern, wenn die Position (IGV_{POS}) nicht in den vorgegebenen Bereich einbezogen wird.

12. Anlage nach einem der Ansprüche 8 bis 11, wobei die Steuervorrichtung (17) konfiguriert ist, die berechnete Pilotgas-Durchflussmengenänderung (ΔQ_{P})zu der Pilotgas-Basisdurchflussmenge (Qp) hinzuzurechnen.

13. Anlage nach einem der Ansprüche 9 bis 12, wobei die Steuervorrichtung (17) konfiguriert ist:
- auf der Basis der Position (IGV_{POS}) der Vielzahl regulierbarer Einlassleitschaufeln (11) einen Korrekturkoeffizienten (K_{IGV}) zu berechnen;
- auf der Basis des berechneten Korrekturkoeffizienten (K_{IGV}) diePilotgas-Durchflussmengenänderung (ΔQ_{P})zu berichtigen.

14. Anlage nach einem der Ansprüche 8 bis 13, wobei das erste Zeitintervall im Bereich von Zehntelsekunden liegt und das zweite Zeitintervall im Bereich einiger zehn Sekunden liegt.

## Revendications

1. Procédé de commande pour commander l'alimentation de gaz pilote vers au moins un ensemble brûleur (15) d'une installation de turbine à gaz (1) ; l'ensemble brûleur (15) comprenant au moins un brûleur pilote (20) ; le procédé comprenant les étapes suivantes :
- la fourniture d'un débit de base de gaz pilote (Qp) au brûleur pilote (20) ;
- le calcul d'un gradient (GRAD) de la puissance électrique (P_{EL}) fournie par l'installation de turbine à gaz (1) ;
- le calcul d'une variation de débit de gaz pilote (ΔQ_{P}) sur la base du gradient calculé (GRAD) ;
- la modification du débit de base de gaz pilote (Qp) sur la base du débit de gaz pilote calculé (ΔQ_{P}) ;
le procédé étant **caractérisé en ce que** l'étape de calcul d'un gradient (GRAD) de la puissance électrique (P_{EL}) comprend les étapes suivantes :
- le calcul d'une première moyenne mobile (MV) de la puissance électrique (P_{EL}) dans un premier intervalle de temps ;
- le calcul d'une seconde moyenne mobile (ML) de la puissance électrique (P_{EL}) dans un second intervalle de temps plus long que le premier intervalle de temps ;
- le calcul du gradient (GRAD) sur la base de la comparaison entre la première moyenne mobile (MV) et la seconde moyenne mobile (ML).

2. Procédé selon la revendication 1, dans lequel l'étape de modification du débit de base de gaz pilote (Q_{P}) sur la base du débit de gaz pilote calculé (ΔQ_{P}) comprend l'étape de modification du débit de base de gaz pilote (Qp) lorsque la position (IGV_{POS}) d'une pluralité d'aubes de stator d'entrée réglables (11) d'un compresseur (3) de l'installation de turbine à gaz (1) est incluse dans un intervalle prédéfini.

3. Procédé selon la revendication 2, dans lequel l'intervalle prédéfini est d'environ 0,1 à 0,9.

4. Procédé selon la revendication 2 ou 3, comprenant l'étape de non modification du débit de base de gaz pilote (Qp) lorsque la position (IGV_{POS}) n'est pas incluse dans l'intervalle prédéfini.

5. Procédé selon l'une quelconque des revendications précédentes, dans lequel l'étape de modification du débit de gaz pilote (Q_{P}) comprend l'étape d'ajout de la variation du débit de gaz pilote calculée (ΔQ_{P}) au débit de base de gaz pilote (Q_{P}).

6. Procédé selon l'une quelconque des revendications 2 à 5, comprenant les étapes suivantes :
- le calcul d'un coefficient de correction (K_{IGV}) sur la base de la position (IGV_{POS}) d'une pluralité d'aubes de stator d'entrée réglables (11) d'un compresseur (3) de l'installation de turbine à gaz (1) ;
- la correction de la variation du débit de gaz pilote (ΔQ_{P}) sur la base du coefficient de correction calculé (K_{IGV}).

7. Procédé selon l'une quelconque des revendications précédentes, dans lequel le premier intervalle est de l'ordre de dixièmes de secondes, et le second intervalle de temps est de l'ordre de dizaines de secondes.

8. Centrale de turbine à gaz comprenant :
au moins un ensemble brûleur (15), doté d'au moins un brûleur pilote (20) alimenté avec un débit de base de gaz pilote (Qp) ;
un compresseur (3) doté d'une pluralité d'aubes de stator d'entrée réglables (11) ;
un dispositif de commande (17) configuré :
- pour calculer un gradient (GRAD) de la électrique (P_{EL}) fournie par l'installation de turbine à gaz (1) ;
- pour calculer une variation de débit de gaz pilote (ΔQ_{P}) sur la base du gradient calculé (GRAD) ;
- pour modifier le débit de base de gaz pilote (Q_{P}) sur la base du débit de gaz pilote calculé (ΔQ_{P}) ;
l'installation étant **caractérisée en ce que** le dispositif de commande (17) est configuré pour calculer le gradient (GRAD) de la puissance électrique (P_{EL}) fournie par l'installation de turbine à gaz (1) sur la base de la comparaison entre une première moyenne mobile (MV) de la puissance électrique (P_{EL}) et une seconde moyenne mobile (ML) de la puissance électrique (P_{EL}) ; la première moyenne mobile (MV) étant calculée dans un premier intervalle de temps et la seconde moyenne mobile (ML) étant calculée dans un second intervalle de temps plus long que le premier intervalle de temps.

9. Installation selon la revendication 8, dans laquelle le dispositif de commande (17) est configuré pour modifier le débit de base de gaz pilote (Q_{P}) à fournir au brûleur pilote (20) sur la base du débit de gaz pilote calculé (ΔQ_{P}) lorsque la position (IGV_{POS}) de la pluralité d'aubes de stator d'entrée réglables (11) est incluse dans une plage prédéfinie.

10. Installation selon la revendication 9, dans laquelle la plage prédéfinie est d'environ 0,1 à 0,9.

11. Installation selon la revendication 9 ou 10, dans laquelle le dispositif de commande (17) est configuré pour ne pas modifier le débit de base de gaz pilote (Q_{P}) lorsque la position (IGV_{POS}) n'est pas incluse dans la plage prédéfinie.

12. Installation selon l'une quelconque des revendications 8 à 11, dans laquelle le dispositif de commande (17) est configuré pour ajouter la variation du débit de gaz pilote calculée (ΔQ_{P}) au débit de base de gaz pilote (Qp).

13. Installation selon l'une quelconque des revendications 9 à 12, dans laquelle le dispositif de commande (17) est configuré pour :
- calculer un coefficient de correction (K_{IGV}) sur la base de la position (IGV_{POS}) de la pluralité d'aubes de stator d'entrée réglables (11) ;
- corriger la variation du débit de gaz pilote (ΔQ_{P}) sur la base du coefficient de correction calculé (K_{IGV}).

14. Installation selon l'une quelconque des revendications 8 à 13, dans laquelle le premier intervalle de temps est dans la plage de dixièmes de secondes et le second intervalle de temps est dans la plage de dizaines de secondes.
